# EUROPEAN PATENT APPLICATION

(11) **EP 4 474 096 A1**
(43) Date of publication of application: **11.12.2024**
(21) Application number: 23749840.7
(22) Date of filing: 02.02.2023
(51) Int. Cl.: B23K 26/142, B23K 26/16

(54) **LASER PROCESSING DEVICE AND LASER PROCESSING METHOD**

(30) Priority: 03.02.2022 JP 2022015591
(71) Applicant: NIPPON STEEL CORPORATION, Chiyoda-ku Tokyo 100-8071 (JP)
(72) Inventor: YAMADA, Yoshihiro, Tokyo 100-8071 (JP)
(74) Representative: Vossius & Partner Patentanwälte Rechtsanwälte mbB
(86) International application number: PCT/JP2023/003467
(87) International publication number: WO 2023/149524

(57) **Abstract**

This laser processing device includes: a laser light source unit for irradiating the surface of a steel sheet being conveyed in a prescribed direction with laser light; an air nozzle for discharging first gas toward the irradiation site of the laser light at a flow velocity of 140 m/sec or less; and a first dust collection unit having a first opening section in which a central axis passing through the center of an opening shape is disposed substantially parallel to a nozzle main axis direction of the air nozzle and which is formed at a position facing the surface of the steel sheet, and a first dust collection duct linked to the first opening section, the first dust collection unit suctioning laser spatter generated from the irradiation site of the laser light via the first opening section and collecting the suctioned laser spatter using the first dust collection duct in a state in which the average suction flow velocity, which is a value obtained by dividing the suctioning flow rate of the first dust collection duct by the cross-sectional area of the first dust collection duct, is from 15 m/sec to 50 m/sec.

## Description

### Technical Field

The present disclosure relates to a laser processing device and a laser processing method.

### Background Art

For example, as in magnetic domain control processing of an oriented magnetic steel sheet disclosed in Japanese Patent Application Laid-Open (JP-A) No. S57-203720, in the iron and steel industry, surfaces of steel sheets conveyed in a prescribed direction may be irradiated with laser light to perform some machining on the surfaces of the steel sheets. Dust called laser spatter is generated from the surfaces of the steel sheets due to the irradiation of laser light. If the laser spatter is left as it is, there is a possibility that the laser spatter will adhere to the surfaces of the steel sheets and adversely affects the performance of the steel sheets. Hence, it is required to remove the generated laser spatter from surrounding regions of steel sheets. Therefore, various technologies for removing laser spatter from surrounding regions of steel sheets have been proposed.

For example, Japanese National-Phase Publication (JP-A) No. 2019-509394 discloses a device including laser irradiation equipment for forming a groove in a surface of a steel sheet, an air knife for removing molten iron remaining in the groove formed in the surface of the steel sheet, and a dust collection hood for suctioning and removing fumes and molten iron.
Patent Literature 1: JP-ANo. S57-203720
Patent Literature 2: JP-ANo. 2019-509394

### SUMMARY OF INVENTION

### Technical Problem

However, as a result of verifying the dust collecting device disclosed in JP-A No. 2019-509394 by the present discloser, it has been found that sufficient dust collection efficiency of laser spatter is not obtained. Therefore, it has become clear that the surrounding region of the laser irradiation equipment is contaminated by the laser spatter that has not been removed, and as a result, there is a problem in that maintenance of the laser irradiation equipment takes time and effort.

In consideration of the next Top Runner regulations for industrial machines and the like, in magnetic domain control processing of oriented magnetic steel sheets, it is required to further increase the laser power of laser light which is emitted (for example, increase to about 1 to 5 J/mm²) in order to further reduce an iron loss. An increase is estimated in the amount of laser spatter generated as the laser power is further increased. In order to cope with an increase in laser spatter, further improvement in dust collection efficiency is required.

In this respect, the disclosure has been made in view of the above description, and the disclosure provides a laser processing device and a laser processing method capable of more efficiently collecting laser spatter generated due to irradiation of laser light.

### Solution to Problem

In order to solve the above problems, as a result of intensive studies by the present discloser, the present discloser has found that using an air knife that generates an air flow to the extent that dust (that is, laser spatter) remaining in a groove formed in a surface of a steel sheet can be scraped out as disclosed in JP-A No. 2019-509394 is one factor that conversely reduces the dust collection efficiency of laser spatter.

The present discloser has simulated the air flow in the vicinity of an irradiation site of the laser light in various patterns. As a result, the present discloser has found that, when an opening section of a mechanism for collecting the laser spatter is provided to face the surface of the steel sheet, a suctioning flow rate for collecting the laser spatter can be decreased, and an air flow that enables dust to be more efficiently collected can be generated.

The disclosure completed through further intensive studies includes the following aspects based on the above findings.
(1) A laser processing device includes: a laser light source unit for irradiating a surface of a steel sheet being conveyed in a prescribed direction with laser light; an air nozzle for discharging first gas toward an irradiation site of the laser light at a flow velocity of 140 m/sec or less; and a first dust collection unit having a first opening section in which a central axis passing through a center of an opening section shape is disposed substantially parallel to a nozzle main axis direction of the air nozzle and which is formed at a position facing the surface of the steel sheet, and a first dust collection duct linked to the first opening section, the first dust collection unit suctioning laser spatter generated from the irradiation site of the laser light via the first opening section and collecting the suctioned laser spatter using the first dust collection duct in a state in which an average suction flow velocity, which is a value obtained by dividing a suctioning flow rate of the first dust collection duct by a cross-sectional area of the first dust collection duct, is from 15 m/sec to 50 m/sec.
(2) A laser processing device includes: a laser light source unit for irradiating a surface of a steel sheet being conveyed in a prescribed direction with laser light; an air nozzle for discharging first gas toward an irradiation site of the laser light at a flow velocity of 140 m/sec or less; a first dust collection unit having a first opening section in which a central axis passing through a center of an opening shape is disposed substantially parallel to a nozzle main axis direction of the air nozzle and which is formed at a position facing the surface of the steel sheet, and a first dust collection duct linked to the first opening section, the first dust collection unit suctioning laser spatter generated from the irradiation site of the laser light via the first opening section and collecting the suctioned laser spatter using the first dust collection duct in a state in which the average suction flow velocity, which is a value obtained by dividing a suctioning flow rate of the first dust collection duct by a cross-sectional area of the first dust collection duct, is from 10 m/sec to 50 m/sec; and a second dust collection unit that is provided at a downstream side of the first opening section of the first dust collection unit in a conveyance direction of the steel sheet, and that has a second opening section provided at a position facing the surface of the steel sheet, a slit nozzle which is provided at a position different from a position of the second opening section and through which second gas is discharged to the surface of the steel sheet, and a second dust collection duct connected to the second opening section in a positional relationship in which a suctioning direction of the laser spatter is substantially parallel to a nozzle main axis direction of the slit nozzle, the second dust collection unit discharging the second gas at a flow velocity of 140 m/sec or less through the slit nozzle, suctioning the laser spatter, which is not collected by the first dust collection unit, via the second opening section, and collecting the suctioned laser spatter using the second dust collection duct in a state in which an average suction flow velocity, which is a value obtained by dividing a suctioning flow rate of the second dust collection duct by a cross-sectional area of the second dust collection duct, is from 15 m/sec to 30 m/sec.
(3) A laser processing method includes: irradiating a surface of a steel sheet being conveyed in a prescribed direction with laser light, by a laser light source unit; discharging first gas toward an irradiation site of the laser light at a flow velocity of 140 m/sec or less, by an air nozzle; suctioning laser spatter generated from the irradiation site of the laser light via a first opening section of a first dust collection unit having the first opening section in which a central axis passing through a center of an opening shape is disposed substantially parallel to a nozzle main axis direction of the air nozzle and which is formed at a position facing the surface of the steel sheet, and a first dust collection duct connected to the first opening section; and collecting the suctioned laser spatter using the first dust collection duct in a state in which an average suction flow velocity, which is a value obtained by dividing a suctioning flow rate of the first dust collection duct by a cross-sectional area of the first dust collection duct, is from 15 m/sec to 50 m/sec.
(4) A laser processing method includes: irradiating a surface of a steel sheet being conveyed in a prescribed direction with laser light, by a laser light source unit; discharging first gas toward an irradiation site of the laser light at a flow velocity of 140 m/sec or less, by an air nozzle; suctioning laser spatter generated from the irradiation site of the laser light via a first opening section of a first dust collection unit having the first opening section in which a central axis passing through a center of an opening shape is disposed substantially parallel to a nozzle main axis direction of the air nozzle and which is formed at a position facing the surface of the steel sheet, and a first dust collection duct connected to the first opening section; collecting the suctioned laser spatter using the first dust collection duct in a state in which an average suction flow velocity, which is a value obtained by dividing a suctioning flow rate of the first dust collection duct by a cross-sectional area of the first dust collection duct, is from 10 m/sec to 50 m/sec; discharging second gas at a flow velocity of 140 m/sec or less using a slit nozzle of a second dust collection unit that is provided at a downstream side of the first opening section of the first dust collection unit in a conveyance direction of the steel sheet, and that has a second opening section provided at a position facing the surface of the steel sheet, the slit nozzle through which the second gas is discharged to the surface of the steel sheet and which is provided at a position different from a position of the second opening section, and a second dust collection duct which is connected to the second opening section in a positional relationship in which a suctioning direction of the laser spatter is substantially parallel to a nozzle main axis direction of the slit nozzle; suctioning, via the second opening section, the laser spatter which is not collected by the first dust collection unit; and collecting the suctioned laser spatter using the second dust collection duct in a state in which an average suction flow velocity, which is a value obtained by dividing a suctioning flow rate of the second dust collection duct by a cross-sectional area of the second dust collection duct, is from 15 m/sec to 30 m/sec.

According to the disclosure, it is possible to more efficiently collect laser spatter generated due to irradiation of laser light.

### BRIEF DESCRIPTION OF DRAWINGS

Fig. 1A is a diagram schematically showing an example of a configuration of a laser processing device according to a first embodiment of the disclosure.
Fig. 1B is a diagram schematically showing an example of the configuration of the laser processing device according to the first embodiment.
Fig. 1C is a diagram schematically showing an example of the configuration of the laser processing device according to the first embodiment.
Fig. 2 is a diagram for describing a positional relationship of a first dust collection unit in the laser processing device according to the first embodiment.
Fig. 3 is a diagram for describing a first dust collection unit in the laser processing device according to the first embodiment.
Fig. 4A is a diagram including a cross section obtained in a case of cutting along line 4A-4A in Fig. 4B for describing another example of the configuration of the laser processing device according to the first embodiment.
Fig. 4B is a plan view for describing the other example of the configuration of the laser processing device according to the first embodiment.
Fig. 4C is a plan view for describing a modification example of the configuration of the laser processing device according to the first embodiment.
Fig. 5 is a graph showing a relationship between an average suction flow velocity and a dust collection ratio in a cross section of a first dust collection duct of the first dust collection unit.
Fig. 6 is a graph showing a relationship between an average suction flow velocity and a dust collection ratio in a cross section of a second dust collection duct of a second dust collection unit.
Fig. 7 is a diagram schematically showing an example of a configuration of a laser processing device according to a second embodiment of the disclosure.

### DESCRIPTION OF EMBODIMENTS

Hereinafter, preferred embodiments of the disclosure will be described in detail with reference to the accompanying drawings. In the present specification and the drawings, components having substantially the same functional configuration are denoted by the same reference numerals, and redundant description thereof is omitted.

However, relationships between thicknesses and planar dimensions of devices or members in the drawings, ratios of the thicknesses of the devices and the members, and the like are different from actual ones. Hence, specific thicknesses and planar dimensions need to be determined in consideration of the following description. The drawings also include portions having different dimensional relationships and ratios. Unless otherwise specified in the specification, the number of each component of the disclosure is not limited to one, and a plurality of components may be present.

As described above, as a result of intensive studies by the present discloser on the device described in JP-A No. 2019-509394, it has been revealed that using an air knife as used in JP-A No. 2019-509394 is one factor that conversely reduces dust collection efficiency of laser spatter.

That is, the air knife generates a strong air flow exceeding 140 m per second, for example, to be able to scrape out laser spatter which is dust remaining in a groove formed on a surface of a steel sheet. It has been found that the strong air flow is always generated, and thus an air flow for performing suctioning is likely to be disturbed by two dust collection hoods disposed in front of and behind an irradiation site of laser light, and the dust collection efficiency of the laser spatter is reduced.

Regarding the device disclosed in JP-A No. 2019-509394, an air flow in the vicinity of the irradiation site of the laser light was simulated. As a result, it has been found that, conversely, a blank portion of the air flow, that is, a stagnant region of the flow, is likely to be generated in the vicinity of the irradiation site of the laser light due to the suctioning performed by the two dust collection hoods, and thus the dust collection efficiency is reduced.

Based on the above findings, the present discloser conducted intensive studies. As a result, it has been conceived that the dust collection efficiency of laser spatter can be further improved by controlling an air flow in the vicinity of an irradiation site of laser light to have a more appropriate state without using an object which generates a strong air flow, such as an air knife.

A laser processing device and a laser processing method according to embodiments of the disclosure completed based on the findings will be described in detail below.

### <<First Embodiment>>

### (Regarding Laser Processing Device)

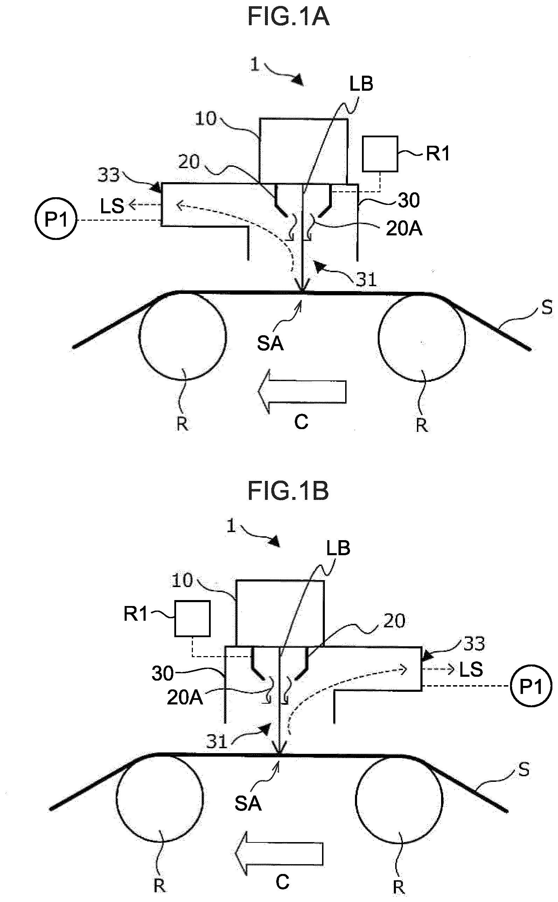

Hereinafter, a laser processing device according to a first embodiment of the disclosure will be described in detail with reference to Figs. 1A to 7.

Figs. 1A to 1C are diagrams schematically showing an example of a configuration of the laser processing device according to the first embodiment. The laser processing device according to the first embodiment is a device that performs a process of forming a groove by irradiating a surface of a steel sheet being conveyed with laser light LB. The laser processing device according to the first embodiment is a device that collects laser spatter LS, which is dust generated from a irradiation site SA of the laser light LB due to the emitted laser light LB. In the disclosure, the "laser processing device" can be regarded as a "laser spatter collecting device", and the "laser processing method" can be regarded as a "laser spatter collecting method".

Here, the steel sheet to which the laser processing device according to the embodiment is used is not particularly limited. The laser processing device according to the embodiment can be applied to various known steel sheets. The processing using the laser light to be focused on in the embodiment is also not particularly defined. The laser processing device according to the embodiment can be applied to various types of known processing using laser light, which are performed at any timing of a manufacturing step for manufacturing various steel sheets.

As schematically shown in Figs. 1A to 1C, a laser processing device 1 according to the embodiment includes a laser light source unit 10, an air nozzle 20, and a first dust collection unit 30. Operating states of the laser light source unit 10, the air nozzle 20, and the first dust collection unit 30 are controlled by, for example, various computers (not shown) such as a process computer that integrally controls manufacturing steps of a steel sheet.

As schematically shown in Figs. 1A to 1C, the laser processing device 1 according to the embodiment is installed, for example, between adjacent conveyance rolls R provided at prescribed intervals in a conveyance direction C of a steel sheet S.

### <Steel Sheet S>

In the first embodiment, a threading speed of the steel sheet S is about 0.1 m/min or more and about 5 m/min or less. In a case where the threading speed is less than 0.1 m/min, productivity decreases, and thus processing costs increase. In a case where the threading speed exceeds 5 m/min, threading equipment becomes excessively large, productivity decreases, and thus the processing costs increase. In the disclosure, the threading speed can be set to any speed.

In the first embodiment, the strip-shaped steel sheet S has a sheet width of from 0.3 m to 3 m. The sheet width is a length measured in a direction orthogonal to the conveyance direction in a plan view. In a case where the sheet width is less than 0.3 m, productivity is reduced, and thus processing costs increase. In a case where the sheet width exceeds 3 m, the threading equipment becomes excessively large, productivity is reduced, and thus the processing costs increase. In the disclosure, the sheet width can be set to any width.

### <Laser Light Source Unit 10>

The laser light source unit 10 according to the embodiment irradiates the surface of the steel sheet S which is a processing target with the laser light LB having a prescribed wavelength. The laser light LB can be scanned in a sheet width direction of the steel sheet S or in a direction slightly inclined with respect to the sheet width direction in a plan view. The sheet width direction of the steel sheet S is a direction which is orthogonal to the conveyance direction C of the steel sheet S and which penetrates the paper sheet of Figs. 1A and 1B.

In the disclosure, scanning of the laser light as linear irradiation is not essential, and the laser light may be applied in a point shape. The laser light source unit 10 has a laser light source (not shown) for emitting the laser light LB having a wavelength and intensity suitable for realizing the processing to be focused on, and an optical system (not shown) for guiding the laser light LB emitted from the laser light source to the surface of the steel sheet S.

The laser light source unit 10 extends in the sheet width direction. The laser processing device 1 irradiates, with the laser light LB, the surface of the steel sheet S being threaded to intermittently form, in the conveyance direction, a plurality of grooves extending linearly in the sheet width direction.

In the first embodiment, intervals between the plurality of grooves in the conveyance direction C is from about 1 mm to about 50 mm. In a case where the intervals between the grooves are shorter than 1 mm, the threading speed needs to be decreased. Therefore, the productivity decreases, and as a result, the production cost increases. In a case where the intervals between the grooves exceed 50 mm, it is difficult to obtain a performance improvement effect by performing the processing. In the disclosure, the interval between the grooves can be randomly set.

The laser light source is not particularly limited, and various laser light sources such as various solid-state laser light sources, gas laser light sources, and semiconductor laser light sources can be used. The optical system is not particularly limited, and various optical systems for guiding the laser light to the surface of the steel sheet S can be used.

An installation position of the laser light source unit 10 is not particularly limited, but for example, as schematically shown in Figs. 1A to 1C, it is preferable that the laser light source unit is provided above the steel sheet S in a vertical direction such that an irradiation optical axis of the laser light LB is substantially perpendicular to the surface of the steel sheet S when viewed from a side surface.

### <Air Nozzle 20>

The air nozzle 20 extends in the sheet width direction. A length of an opening portion of the air nozzle 20 in the conveyance direction C is about 2 mm. A length of the opening portion of the air nozzle 20 in the sheet width direction is about 1,000 mm. That is, an opening area of the air nozzle 20 is about 2 × 10⁻³ [m²]. The air nozzle 20 is connected with a first blower R1 that blows first gas 20A to the air nozzle 20. A discharge flow velocity of the first gas 20A from the air nozzle 20 is, for example, about 140 meters per second.

The air nozzle 20 discharges dry air supplied from an air supply pipe (not shown), as an example of the first gas 20A, to the irradiation site SA of the laser light LB on the surface of the steel sheet S. Laser spatter LS, which is dust located on the surface of the steel sheet S, is stirred up from the surface of the steel sheet by the dry air discharged from the air nozzle 20 and is collected by the first dust collection unit 30 along with an air flow formed by the first dust collection unit 30 to be described below.

In the laser processing device 1 according to the embodiment, an air knife having a flow velocity at which the laser spatter LS is scraped out from an inside of the groove in the surface of the steel sheet as disclosed in JP-A No. 2019-509394 is not used. The laser processing device 1 according to the embodiment discharges dry air having a flow velocity lower than that of the air knife. Consequently, unlike the air knife, the laser spatter LS can be stirred up from the surface of the steel sheet S and superimposed on the air flow formed by the first dust collection unit 30 without disturbing an air flow for collecting dust.

The flow velocity (that is, the discharge flow velocity) of the dry air discharged from the air nozzle 20 is preferably 140 m/sec or less, and more preferably 100 m/sec or less. Since air is discharged at a discharge flow velocity of 140 m/sec or less, it is possible to further prevent the air flow for collecting dust from being disturbed.

The discharge flow velocity in the air nozzle 20 is preferably 50 m/sec or more, more preferably 55 m/sec or more, and still more preferably 60 m/sec or more. Air discharged at a discharge flow velocity of 0 m/sec or more enables the laser spatter LS to be further stirred up from the surface of the steel sheet S.

An installation position of the air nozzle 20 is not particularly limited as long as the installation position is a position where dry air can be discharged to the surface of the steel sheet S. However, as shown in Figs. 1A to 1C, the air nozzle 20 is preferably provided immediately above the steel sheet S, and more preferably provided such that a nozzle main axis direction (in other words, a traveling direction of discharged dry air) of the air nozzle 20 is substantially coaxial with an optical axis direction of the laser light LB in the laser light source unit 10.

Here, in the embodiment, a discharge flow rate of the dry air discharged from the air nozzle 20 is preferably equal to or less than a suctioning flow rate of the first dust collection unit 30 to be described below. By discharging the dry air at the discharge flow rate equal to or lower than the suctioning flow rate of the first dust collection unit 30, it is possible to more reliably curb disturbing of the air flow for suctioning the laser spatter LS by the dry air from the air nozzle 20 while the laser spatter LS is stirred up from the surface of the steel sheet S.

As a result, the dust collection efficiency of the laser spatter LS can be further improved. It is more preferable to more finely control the discharge flow rate of the dry air discharged from the air nozzle 20. Since the discharge flow rate is finely controlled, the dust collection efficiency by the first dust collection unit 30 to be described below can be further improved.

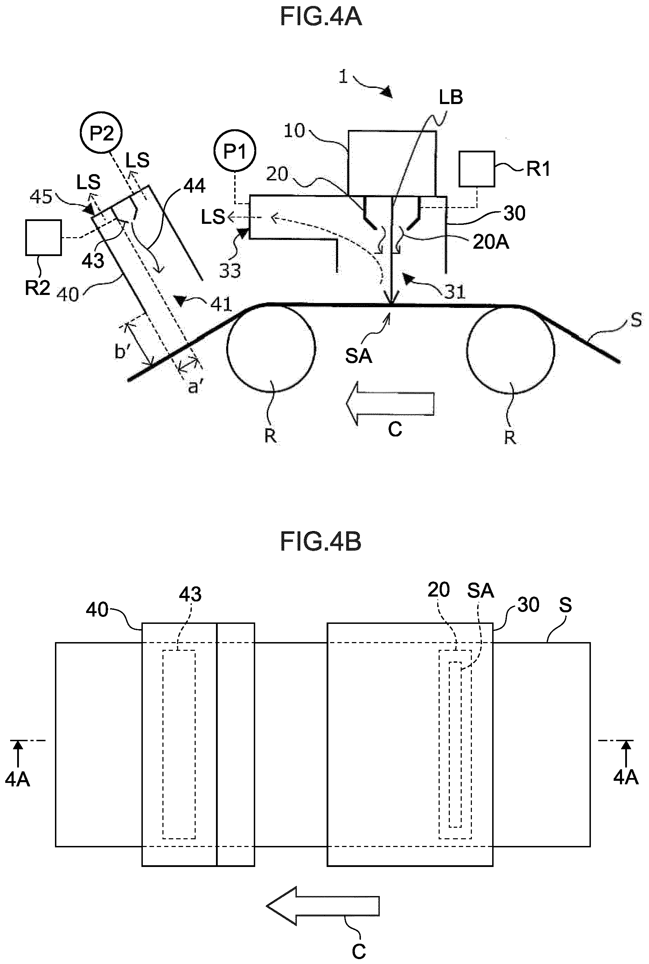

As will be shown by the air nozzle 20 in Fig. 4B to be described below, in the embodiment, the air nozzle 20 extends in the sheet width direction of the steel sheet S. The discharge flow rate per unit sheet width of the air nozzle 20 is from about 0.1 cubic meters per minute to about 17 cubic meters per minute. In a case where the discharge flow rate per unit sheet width of the air nozzle 20 is less than 0.1 cubic meters per minute, an effect of curbing adhesion of the laser spatter LS to the slit nozzle 43 is reduced. In a case where the discharge flow rate per unit sheet width of the air nozzle 20 exceeds 17 cubic meters per minute, diffusion of the laser spatter LS becomes too widely diffused, and the dust collection efficiency decreases. In the disclosure, the discharge flow rate per unit sheet width of the air nozzle can be randomly set.

A specific example of the air nozzle 20 that discharges dry air is not particularly limited, and it is possible to use various known air injecting nozzles. Examples of the air injecting nozzles include various spray nozzles.

The first gas 20A discharged from the air nozzle 20 is not limited to dry air and may be nitrogen, argon, oxygen, helium, or the like.

### <First Dust collection unit 30>

The first dust collection unit 30 is a mechanism that collects the laser spatter LS floating in the vicinity of the irradiation site SA of the laser light LB due to the discharge of dry air from the air nozzle 20. The first dust collection unit 30 has, for example, a first opening section 31 for suctioning the laser spatter LS into a first housing (for example, a dust collection hood), and a first dust collection duct 33 for collecting the suctioned laser spatter LS, the first dust collection duct 33 being linked to the first opening section 31. The first housing is installed along the laser light source unit 10. In other words, the first opening section 31 of the first housing extends in the sheet width direction to be visually recognized from the first dust collection unit 30 in Fig. 4B to be described below.

As shown in Figs. 1A to 1C, the first dust collection duct 33 is linked to the first opening section 31 by, for example, a substantially L-shaped flow path. The first dust collection duct 33 is connected with a dust collection flow path (not shown) for ejecting the laser spatter LS to an outside of a system. A suctioning fan (not shown) provided on the dust collection flow path is operated by a first suctioning pump P1, so that the laser spatter LS reaching the first dust collection duct 33 can be collected.

In the first embodiment, an output per unit sheet width of the first suctioning pump P1 connected to the first opening section 31 is from about 6.6 kW to about 33 kw. In a case where the output per unit sheet width of the first suctioning pump P1 is less than 6.6 kW, it is difficult to obtain the necessary suctioning capacity, and thus a spatter collecting capacity is decreased. In a case where the output per unit sheet width of the first suctioning pump P1 exceeds 33 kw, the suctioning capacity becomes too much increased. Excessive suctioning capacity leads to equipment vibration, thus resulting in difficulty in laser processing. In the disclosure, the output per unit sheet width of the first suctioning pump can be randomly set.

The first dust collection unit 30 is configured to suction the atmosphere around the first opening section 31 at a prescribed suctioning flow rate. An operation of suctioning the atmosphere around the first opening section 31 at the prescribed suctioning flow rate causes the laser spatter LS floating in the vicinity of the irradiation site SA of the laser light LB to be collected from the first opening section 31.

As schematically shown in Figs. 1A to 1C, in the first dust collection unit 30 according to the embodiment, the first opening section 31 is provided at a position facing the surface of the steel sheet being conveyed. That is, the first opening section 31 faces the surface of the steel sheet being conveyed. In the first dust collection unit 30 according to the embodiment, a central axis passing through a center of an opening shape of the first opening section 31 is disposed to be substantially parallel to the nozzle main axis direction of the air nozzle 20, and the first opening section 31 is configured substantially only of a side wall. In the embodiment, a gap between the first opening section 31 and the surface of the steel sheet S is formed all over an opening edge.

In the specification, "being substantially parallel" means not only a case where an intersection angle between the central axis passing through the center of the opening shape of the first opening section 31 and the nozzle main axis direction of the air nozzle 20 is 0 degrees, but also a case where the intersection angle is within plus and minus 30 degrees with respect to 0 degrees.

As a result of various simulations performed by the present discloser, since the central axis passing through the center of the opening shape of the first opening section 31 is disposed to be substantially parallel to the nozzle main axis direction of the air nozzle 20, it is possible to reduce the suctioning flow rate for collecting the laser spatter LS. As a result, it is possible to realize an air flow that enables more efficient dust collection. The central axis passing through the center of the opening shape of the first opening section 31 may be provided to match the nozzle main axis direction of the air nozzle 20 (in other words, to be coaxial with the nozzle main axis direction of the air nozzle 20).

A moving direction of the laser spatter LS after passing through the first opening section 31 depends on the position of the first dust collection duct 33 provided in the first housing. Although not shown, for example, the first dust collection duct 33 can also be provided above the first opening section 31 in a vertical direction so as not to interfere with the disposition of the laser light source unit 10 or the air nozzle 20, depending on a disposition environment of the laser processing device 1.

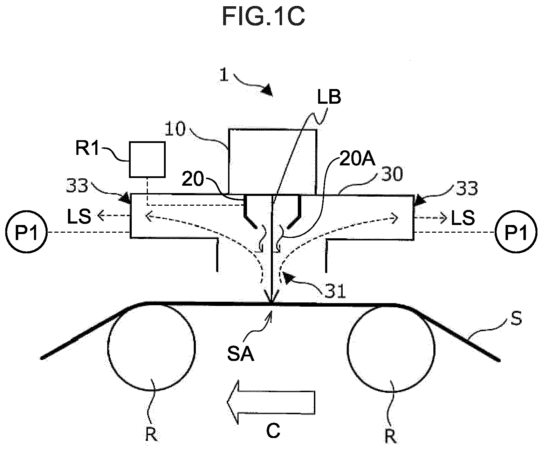

In this respect, as schematically shown in Figs. 1A to 1C, the first dust collection duct 33 of the first dust collection unit 30 is preferably provided such that a suctioning direction of the laser spatter LS in the first dust collection duct 33 is substantially parallel to the conveyance direction C. In the example shown in Fig. 1A, the first dust collection duct 33 is provided at a downstream side of the irradiation site SA of the laser light LB. In the example shown in Fig. 1B, the first dust collection duct 33 is provided at an upstream side of the irradiation site SA of the laser light LB. In the example shown in Fig. 1C, the first dust collection ducts 33 are provided both of the upstream side and the downstream side of the irradiation site SA of the laser light LB.

Here, when the disposition of the first dust collection duct 33 shown in Fig. 1A is compared with the disposition of the first dust collection duct 33 shown in Fig. 1B, first, it is more preferable that the first dust collection duct 33 is provided at the downstream side of the irradiation site SA of the laser light LB, as shown in Fig. 1A. This is because the steel sheet S that is a processing target to be focused on in the embodiment is conveyed in the conveyance direction C, so that an air flow (that is, an accompanying flow) from an upstream side to a downstream side in the conveyance direction C is generated.

Therefore, by first providing the first dust collection duct 33 at the downstream side of the irradiation site SA of the laser light LB, the accompanying current can also be utilized, and the laser spatter LS can be more reliably collected. Thereafter, if there is a sufficient space, as shown in Fig. 1C, the first dust collection duct 33 is provided ay not only the downstream side but also the upstream side thereof, and thereby the laser spatter LS can be more reliably collected.

The specific configuration of the first dust collection unit 30 is not particularly limited, and various known mechanisms can be used, if appropriate. In the disclosure, for example, a plurality of first dust collection units may be arranged in the sheet width direction.

The suctioning flow rate of the first dust collection unit 30 is preferably equal to or higher than the discharge flow rate of dry air from the air nozzle 20. Consequently, the air flow around the irradiation site SA of the laser light LB can be more reliably prevented from being stagnant, and it is possible to more reliably collect the laser spatter LS. A specific range of the suctioning flow rate will be described again below.

In the first dust collection unit 30, the average suction flow velocity (that is, one obtained by dividing the suctioning flow rate of the first dust collection duct 33 by a cross-sectional area of the first dust collection duct 33) in a cross section of the first dust collection duct 33 is, for example, from 15 m/sec to 50 m/sec. In a case where the average suction flow velocity is less than 15 m/sec, it is difficult to sufficiently collect the laser spatter LS.

In a case where the average suction flow velocity exceeds 50 m/sec, the first dust collection unit 30 is vibrated, and thereby the air flow around the irradiation site SA of the laser light LB is disturbed, thus, resulting in difficulty in laser processing. By performing collection in a state in which the average suction flow velocity is from 15 m/sec to 50 m/sec, it is possible to further collect the laser spatter LS without disturbing the air flow around the irradiation site SA of the laser light LB. The average suction flow velocity is preferably from 17 m/sec to 22 m/sec.

As described above, with the laser processing device 1 according to the embodiment, it is possible to more efficiently collect the laser spatter LS generated due to the irradiation of the laser light LB, and for example, it is possible to more easily realize the dust collection efficiency of 80% or more. As a result of further improving the dust collection efficiency of the laser spatter LS, the laser spatter LS reaching a wall surface of the laser light source unit 10 can also be reduced. Therefore, cleanliness and convenience of maintenance of the laser light source unit 10 can be further improved.

Accordingly, in a case where the laser processing device 1 according to the embodiment is applied to, for example, magnetic domain control processing of an oriented magnetic steel sheet, the generated laser spatter LS can be further collected even in a case where irradiation power of the laser light LB to be emitted is required to be further increased.

### [Regarding Installation Position of First Dust collection unit 30]

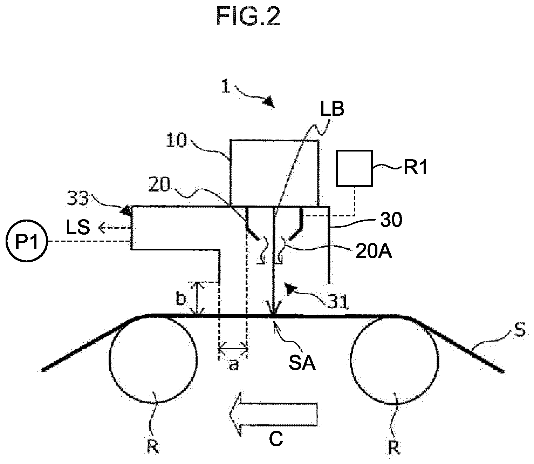

Here, an installation position of the first dust collection unit 30 in the laser processing device 1 according to the embodiment will be described in detail with reference to Fig. 2. Although Fig. 2 shows the case where the first dust collection duct 33 is present at the downstream side of the irradiation site SA of the laser light LB as shown in Fig. 1A, the following description holds true even in the case where the first dust collection duct 33 is present at the positions as shown in Figs. 1B and 1C.

As schematically shown in Fig. 2, the case where the laser processing device 1 according to the embodiment is viewed from a side surface side of the steel sheet S is set. "Being viewed from the side surface side of the steel sheet S" means that the steel sheet S is viewed in the sheet width direction, from a direction in which the thickness of the steel sheet S can be viewed. In a case where the laser light LB is scanned, "viewing from the side surface side of the steel sheet S" may mean viewing in a scanning direction.

When the laser processing device 1 is viewed from the side surface side of the steel sheet S, as shown in Fig. 2, a separation distance in the conveyance direction C between a position corresponding to an end surface of the air nozzle 20 and an opening end portion of the first opening section 31 of the first dust collection unit 30 is represented as a distance a. A minimum value of a height from the irradiation site of the laser light LB on the steel sheet S to a lower end of the first opening section 31 of the first dust collection unit 30 is represented as a distance b.

In the laser processing device 1 according to the embodiment, a length of the distance a as shown in Fig. 2 is preferably 25 mm or less. When the distance a is 25 mm or less, it is possible to efficiently and further suction the laser spatter LS floating in the vicinity of the irradiation site SA of the laser light LB. As a result, adhesion of the laser spatter LS to the laser light source unit 10 or the air nozzle 20 can be more reliably prevented, and this can contribute to improvement in durability of the laser light source unit 10 and the air nozzle 20.

In addition, adhesion of the laser spatter LS to a lower end portion of the first opening section 31 of the first dust collection unit 30 and an upper surface of an inner wall of the first dust collection unit 30 can be further prevented. As a result, clogging of the first dust collection unit 30 and damage to the surface of the steel sheet S due to falling of the laser spatter LS onto the surface of the steel sheet S can be further curbed.

The distance a as shown in Fig. 2 is more preferably 20 mm. The lower limit value of the distance a is not particularly defined, and depends on a dense situation or the like of items of equipment around the first opening section 31, but is substantially set to about 1 mm.

In the laser processing device 1 according to the embodiment, a length of the distance b as shown in Fig. 2 is preferably 10 mm or less. When the distance b is 10 mm or less, a decrease in dust collecting capacity of the laser spatter LS by the first dust collection unit 30 can be further curbed. Therefore, adhesion of the laser spatter LS to the laser light source unit 10 or the air nozzle 20 can be further prevented. As a result, this can contribute to improvement in durability of the laser light source unit 10 or the air nozzle 20.

In addition, adhesion of the laser spatter LS to a lower end portion of the first opening section 31 of the first dust collection unit 30 and an upper surface of an inner wall of the first dust collection unit 30 can be further prevented. Therefore, clogging of the first dust collection unit 30 and damage to the surface of the steel sheet S due to falling of the laser spatter LS onto the surface of the steel sheet S can be further curbed.

The distance b as shown in Fig. 2 is more preferably 5 mm. The lower limit value of the distance b is not particularly defined, and depends on a dense situation or the like of items of equipment around the opening section 31, but is set to substantially about 1 mm.

In the laser processing device 1 according to the embodiment, it is still more preferable that the length of the distance a is about 20 mm and the length of the distance b is 10 mm or less as shown in Fig. 2. This makes it easier to achieve the dust collection efficiency of the laser spatter LS by the first dust collection unit 30 to 80% or more. As a result, the effect of improving the durability of the laser light source unit 10 and the air nozzle 20 and the effect of curbing the clogging of the first dust collection unit 30 and the damage of the surface of the steel sheet S due to the falling of the laser spatter LS onto the surface of the steel sheet S can be exhibited in a more preferable state.

### [Use of Carbon Plate for First Dust collection unit 30]

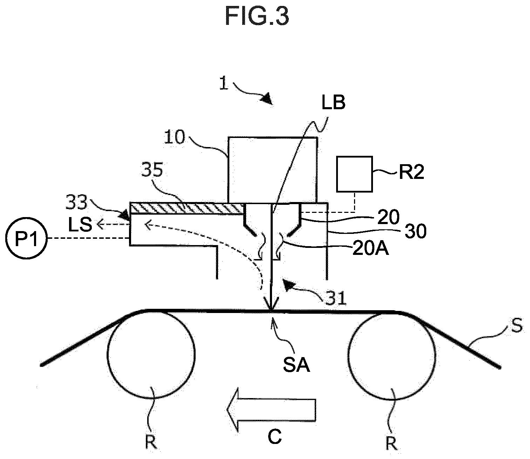

In the laser processing device 1 according to the embodiment, as schematically shown in Fig. 3, a carbon plate 35 may be disposed on a vertically upper portion of the inner wall of the first dust collection unit 30. The first housing (for example, a dust collection hood) constituting the wall surface of the first dust collection unit 30 is generally made of various metals.

The carbon plate 35 is disposed at a site of the first dust collection unit 30, which the collected laser spatter LS can reach, so that it is possible to prevent direct reaction between the laser spatter LS and the metal in the wall surface, and to prevent adhesion of the laser spatter LS. As a result, it is possible to reduce the number of times of maintenance of the inner wall for removing the adhered laser spatter LS.

Although Fig. 3 shows the case where the carbon plate 35 is provided on the entire upper surface of the first dust collection unit 30, the carbon plate 35 may be disposed at least at a site to which laser spatter LS can adhere, or need not be disposed on the entire upper surface of the first dust collection unit 30. The carbon plate 35 can be installed at a site to which the laser spatter LS can adhere, such as a side surface of the first dust collection unit 30, in addition to the upper surface of the first dust collection unit 30.

Instead of installing the carbon plate 35 on the inner wall of the first dust collection unit 30, the wall surface itself of the first dust collection unit 30 may be formed of a carbon plate.

Although Fig. 3 shows the case where the first dust collection duct 33 is present at the downstream side of the irradiation site SA of the laser light LB as shown in Fig. 1A, use of the carbon plate can be performed even in the case where the first dust collection duct 33 is present at the positions as shown in Figs. 1B and 1C.

### <Second Dust collection unit 40>

By providing the first dust collection unit 30 as described above, the laser processing device 1 according to the embodiment can achieve the dust collection efficiency of the laser spatter LS to, for example, 80% or more. However, even in that case, it is conceivable that the laser spatter LS that has not been collected by the first dust collection unit 30 remains on the surface of the steel sheet S.

In this respect, for example, as shown in Fig. 4A, the laser processing device 1 according to the embodiment preferably further includes a second dust collection unit 40 provided at the downstream side of the first opening section 31 of the first dust collection unit 30 in the conveyance direction C. By providing the second dust collection unit 40, even when the laser spatter LS that has not been collected by the first dust collection unit 30 remains, collection can be performed by the second dust collection unit 40, and the laser spatter LS can be collected more efficiently.

As schematically shown in Fig. 4A, the second dust collection unit 40 has a second opening section 41 provided at a position facing a surface of a steel sheet S of a second housing, and a slit nozzle 43 through which second gas 44 is discharged to the surface of the steel sheet S and which is provided at a position different from that of the second opening section 41 of the second housing. The second housing is installed along the laser light source unit 10. In other words, the second opening section 41 of the second housing extends in the sheet width direction to be visibly recognized from the second dust collection unit 40 in Fig. 4B.

The second dust collection unit 40 has a second dust collection duct 45 which collects the laser spatter LS and is linked to the second opening section 41 of the second housing. In the embodiment, a gap between the second opening section 41 and the surface of the steel sheet S is formed all over an opening edge.

As shown in Fig. 4B, the slit nozzle 43 extends in the sheet width direction. A length of an opening portion of the slit nozzle 43 in the conveyance direction C is about 2 mm. A length of the opening portion of the slit nozzle 43 in the sheet width direction is about 1,000 mm. That is, an opening area of the slit nozzle 43 is about 2 × 10⁻³ [m²]. The slit nozzle 43 is connected with a second blower R2 that blows the second gas 44 to the slit nozzle 43. The discharge flow velocity of the second gas 44 from the slit nozzle 43 is, for example, about 140 meters per second.

In the second dust collection unit 40, the slit nozzle 43 and the second dust collection duct 45 are provided in such a positional relationship that a nozzle main axis direction of the slit nozzle 43 and a suctioning direction of the laser spatter LS in the second dust collection duct 45 are substantially parallel to each other. Consequently, the laser spatter LS that has not been collected by the first dust collection unit 30 can be efficiently collected.

A central axis passing through a center of an opening shape of the second opening section 41 of the second dust collection unit 40 is preferably disposed to be substantially parallel to the nozzle main axis direction of the slit nozzle 43. Consequently, air discharged from the slit nozzle 43 can reach the surface of the steel sheet S in a more preferable state, and the dust collection efficiency of the laser spatter LS can be further improved.

Meanwhile, a suctioning flow rate for collecting the laser spatter LS by the second opening section 41 can be reduced, and an air flow that enables more efficient dust collection can be realized. The central axis passing through the center of the opening shape of the second opening section 41 may be provided to match the nozzle main axis direction of the slit nozzle 43 (in other words, to be coaxial with the nozzle main axis direction of the slit nozzle 43).

In the second dust collection unit 40, the slit nozzle 43 discharges dry air supplied from an air supply pipe (not shown), as an example of the second gas 44, toward the surface of the steel sheet S. Consequently, the laser spatter LS adhering to the surface of the steel sheet S can be stirred up. At this time, a discharge amount of dry air discharged from the slit nozzle 43 is preferably set to be equal to or lower than a suctioning flow rate of the second dust collection duct 45 as will be described below.

By discharging the dry air at the discharge amount equal to or lower than the suctioning flow rate of the second dust collection duct 45, it is possible to more reliably curb disturbing of the air flow for suctioning the laser spatter LS by the dry air from the slit nozzle 43 while the laser spatter LS is stirred up from the surface of the steel sheet S. As a result, the dust collection efficiency of the laser spatter LS can be further improved.

The discharge flow velocity of the dry air discharged from the slit nozzle 43 is preferably set to a value equal to or lower than the average suction flow velocity in a cross-sectional portion of the second dust collection duct 45 to be described below. Since the discharge flow velocity of the dry air is equal to or lower than the average suction flow velocity in the cross-sectional portion of the second dust collection duct 45, the dust collection efficiency of the second dust collection unit 40 can be further improved.

A flow velocity (that is, a discharge flow velocity) of the dry air discharged from the slit nozzle 43 is preferably 140 m/sec or less, and more preferably 100 m/sec or less. Since air is discharged at a discharge flow velocity of 140 m/sec or less, it is possible to further prevent the air flow for collecting dust from being disturbed.

The discharge flow velocity in the slit nozzle 43 is preferably 50 m/sec or more, more preferably 55 m/sec or more, and still more preferably 60 m/sec or more. Air discharged at the discharge flow velocity of 50 m/sec or more enables the laser spatter LS to be further stirred up from the surface of the steel sheet S.

The discharge flow rate per unit sheet width of the slit nozzle 43 is from about 0.1 cubic meters per minute to about 17 cubic meters per minute. In a case where the discharge flow rate per unit sheet width of the slit nozzle 43 is less than 0.1 cubic meters per minute, an effect of curbing adhesion of the laser spatter LS to the slit nozzle 43 is reduced. In a case where the discharge flow rate per unit sheet width of the slit nozzle 43 exceeds 17 cubic meters per minute, the laser spatter LS becomes too widely diffused, and the dust collection efficiency decreases. In the disclosure, the discharge flow rate per unit sheet width of the slit nozzle can be randomly set.

A specific example of the slit nozzle 43 through which dry air is discharged is not particularly limited, and it is possible to use various known air injecting slit nozzles.

The second gas 44 discharged from the slit nozzle 43 is not limited to dry air and may be nitrogen, argon, oxygen, helium, or the like.

The second dust collection duct 45 is connected with a dust collection flow path (not shown) for ejecting the laser spatter LS to an outside of a system. A suctioning fan (not shown) provided on the dust collection flow path is operated by a second suctioning pump P2, so that the laser spatter LS reaching the second dust collection duct 45 can be collected.

In the first embodiment, similarly to the case of the first suctioning pump P1, an output per unit sheet width of the second suctioning pump P2 connected to the second opening section 41 is from about 6.6 kW to about 33 kw. In the disclosure, the output per unit sheet width of the second suctioning pump P2 can be randomly set.

The suctioning flow rate of the second dust collection duct 45 is preferably equal to or higher than the discharge flow rate of dry air from the slit nozzle 43. Consequently, the air flow around the second opening section 41 can be further prevented from being stagnant, and it is possible to further collect the laser spatter LS. A specific range of the suctioning flow rate will be described again below.

In the second dust collection unit 40, the average suction flow velocity (that is, a value obtained by dividing the suctioning flow rate of the second dust collection duct 45 by a cross-sectional area of the second dust collection duct 45) in a cross section of the second dust collection duct 45 is, for example, from 15 m/sec to 30 m/sec. In a case where the average suction flow velocity is less than 15 m/sec, it is difficult to sufficiently collect the laser spatter LS.

In a case where the average suction flow velocity exceeds 30 m/sec, the second dust collection unit 40 is vibrated, and the air flow around the second opening section 41 is likely to be disturbed. In a case where an attempt is made to achieve an average suction flow velocity of more than 30 m/sec, too much electric power is required, and this results in an increase in cost. By performing collection in a state in which the average suction flow velocity is from 15 m/sec to 30 m/sec, it is possible to further collect the laser spatter LS without disturbing the air flow around the second opening section 41. The average suction flow velocity is preferably from 17 m/sec to 22 m/sec.

In a plan view from the side surface side of the steel sheet S, as in Fig. 2, the shortest distance (that is, a distance a' in Fig. 4A) between a position corresponding to an end surface of the slit nozzle 43 and an opening end portion of the second opening section 41 is preferably 25 mm or less. When the distance a' is 25 mm or less, it is possible to efficiently and more reliably suction the laser spatter LS floating in the vicinity of the second opening section 41.

The distance a' as shown in Fig. 4A is more preferably 20 mm. The lower limit value of the distance a' is not particularly defined, and depends on a dense situation or the like of items of equipment around the second opening section 41, but is substantially set to about 1 mm.

A distance (that is, the distance b' in Fig. 4A) between the surface of the steel sheet S and a lower end of the second opening section 41 is preferably 10 mm or less. When the distance b' is 10 mm or less, a decrease in dust collecting capacity of the laser spatter LS by the second dust collection unit 40 can be more reliably curbed. The distance b' is more preferably 5 mm. The lower limit value of the distance b' is not particularly defined, and depends on a dense situation or the like of items of equipment around the second opening section 41, but is substantially set to about 1 mm.

Similarly to the first dust collection unit 30, an inner wall of the second housing of the second dust collection unit 40 is preferably formed of a carbon plate. This makes it possible to prevent direct reaction between the laser spatter LS and the metal in the wall surface, and to prevent adhesion of the laser spatter LS. As a result, it is possible to reduce the number of times of maintenance of the inner wall for removing the adhered laser spatter LS.

### (Modification Example)

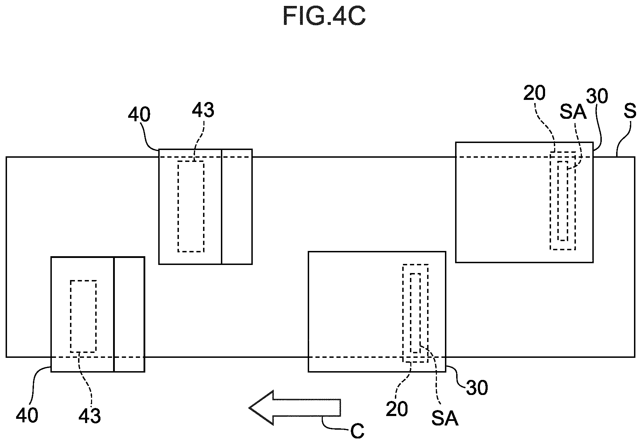

In the embodiment, the case where one site SA being irradiated with laser light is formed in the sheet width direction of the steel sheet S is illustrated. However, in the disclosure, two or more sites being irradiated with laser light may be formed in the sheet width direction. Fig. 4C shows a laser processing device according to a modification example in which two sites SA being irradiated with laser light are formed in the sheet width direction. As shown in Fig. 4C, the numbers of the air nozzles 20, the first dust collection units 30, the second dust collection units 40, the slit nozzles 43, or the like can be set according to the number of the sites SA being irradiated with laser light in the sheet width direction.

### <Regarding Suctioning Flow Rates in First Dust collection unit 30 and Second Dust collection unit 40>

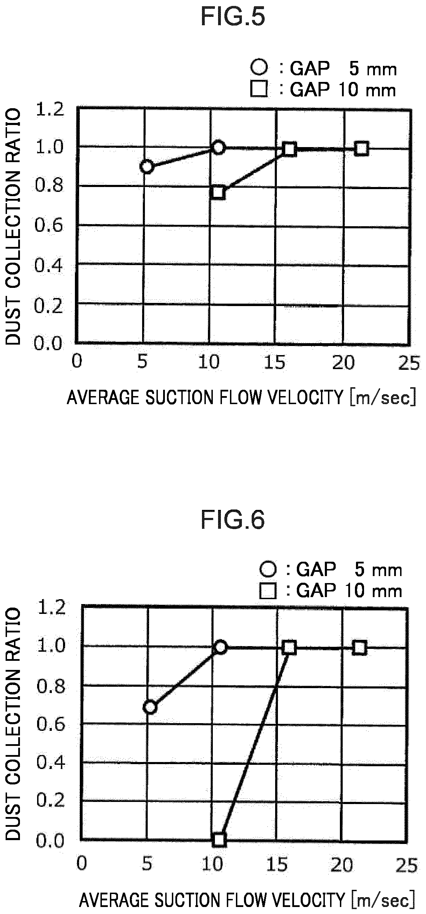

Subsequently, the suction flow velocity in the first dust collection unit 30 and the second dust collection unit 40 will be described in detail with reference to Figs. 5 to 6. Fig. 5 is a graph showing a relationship between the average suction flow velocity and a dust collection ratio in the cross section of the first dust collection duct 33 of the first dust collection unit 30, and Fig. 6 is a graph showing a relationship between the average suction flow velocity and a dust collection ratio in the cross section of the second dust collection duct of the second dust collection unit 40.

Fig. 5 is a graph showing a result of a simulation of the dust collection ratio in a case where the suction flow velocity in the first dust collection duct 33 is changed, when the distance of the first opening section 31 from the air nozzle 20 in the first dust collection unit 30 (that is, the distance a in Fig. 2) is 20 mm, and the distance between the first opening section 31 and the surface of the steel sheet S (that is, the distance b in Fig. 2, also referred to as a gap from the steel plate) is 5 mm or 10 mm.

Similarly, Fig. 6 is a graph showing a result of a simulation of the dust collection ratio in a case where the suctioning flow rate in the second dust collection duct 45 is changed, when the distance of the second opening section 41 from the slit nozzle 43 in the second dust collection unit 40 (that is, the distance a' in Fig. 4A) is 20 mm, and the distance between the second opening section 41 and the surface of the steel sheet S (that is, the gap from the steel plate) is 5 mm or 10 mm. Here, the simulation was conducted using Fluent, which is commercially available numerical calculation software.

In both Figs. 5 and 6, the discharge amount of dry air from the air nozzle 20 or the slit nozzle 43 was constant at 0.053 kg/sec. The dust collection ratio in Figs. 5 and 6 means a value obtained by dividing the number of particles reaching the back of the first dust collection duct 33 by the number of particles of the spatter generated at the irradiation site of the laser light LB (that is, the number of particles reaching the back of the first dust collection duct 33/the number of particles of the generated spatter).

As is clear from Fig. 5, in the case where the central axis of the first opening section 31 of the first dust collection unit 30 is disposed substantially parallel to the nozzle main axis direction of the air nozzle 20, it can be found that the average suction flow velocity in the cross section of the dust collection duct of the first dust collection unit 30 is 15 m/sec or more, so that the dust collection ratio can be 0.9 or higher even when the gap is 10 mm.

In a case where the gap is set to 5 mm, it can be found that the dust collection ratio can be realized to 0.9 or higher even if the average suction flow velocity in the cross section of the dust collection duct of the first dust collection unit 30 is reduced to 6 m/sec. From the result of the simulation, it can be found that excellent dust collection efficiency can be more reliably achieved by setting the average suction flow velocity in the cross section of the dust collection duct of the first dust collection unit 30 to 15 m/sec or more.

As shown in Fig. 4B, in the embodiment, the first dust collection unit 30 extends in the sheet width direction of the steel sheet S. The suctioning flow rate per unit sheet width of the first dust collection duct 33 of the first dust collection unit 30 is set from about 60 cubic meters per minute to about 300 cubic meters per minute. In a case where the suctioning flow rate per unit sheet width of the first dust collection duct 33 is less than 60 cubic meters per minute, it is not possible to obtain a necessary suctioning capacity, and thus the spatter collecting capacity is decreased. In a case where the suctioning flow rate per unit sheet width of the first dust collection duct 33 exceeds 300 cubic meters per minute, the suctioning capacity becomes too much increased. Excessive suctioning capacity leads to equipment vibration, thus resulting in difficulty in laser processing. In the disclosure, the suctioning flow rate per unit sheet width of the first dust collection duct can be randomly set.

Similarly, also in Fig. 6, in the case where the central axis of the second opening section 41 of the second dust collection unit 40 is disposed substantially parallel to the nozzle main axis direction of the slit nozzle 43, it can be found that the average suction flow velocity in the cross section of the second dust collection duct of the second dust collection unit 40 is 15 m/sec or more, so that the dust collection ratio can be 1.0 or higher even when the gap is 10 mm.

In the case where the gap is set to 5 mm, it can be found that the dust collection ratio can be realized to 0.9 or higher even if the average suction flow velocity in the cross section of the second dust collection duct of the second dust collection unit 40 is reduced to about 10 m/sec. From the result of the simulation, it can be found that excellent dust collection efficiency can be achieved by setting the average suction flow velocity in the cross section of the second dust collection duct of the second dust collection unit 40 to 15 m/sec or more.

As shown in Fig. 4B, in the embodiment, the second dust collection unit 40 extends in the sheet width direction of the steel sheet S, similarly to the first dust collection unit 30. The suctioning flow rate per unit sheet width of the second dust collection duct 45 of the second dust collection unit 40 is set from about 60 cubic meters per minute to about 300 cubic meters per minute, similarly to the first dust collection duct 33. In a case where the suctioning flow rate per unit sheet width of the second dust collection duct 45 is less than 60 cubic meters per minute, it is not possible to obtain a necessary suctioning capacity, and thus the spatter collecting capacity is decreased. In a case where the suctioning flow rate per unit sheet width of the second dust collection duct 45 exceeds 300 cubic meters per minute, the suctioning capacity becomes too much increased. Excessive suctioning capacity leads to equipment vibration, thus resulting in difficulty in laser processing. In the disclosure, the suctioning flow rate per unit sheet width of the second dust collection duct can be randomly set.

The laser processing device according to the embodiment has been described in detail with reference to Figs. 1A to 6.

### (Regarding Laser Processing Method)

Using the laser processing device according to the embodiment as described above enables a laser processing method according to the embodiment to be realized as will be described below. The laser processing method according to the embodiment is a method of collecting the laser spatter LS, which is dust generated from the irradiation site SA of the laser light LB due to the laser light LB emitted to the surface of the steel sheet.

In the laser processing method according to the embodiment, the surface of the steel sheet being conveyed in a prescribed direction, that is, in the preset conveyance direction C, is irradiated with the laser light LB from the laser light source unit. In the laser processing method according to the embodiment, the dry air as an example of the first gas 20A is discharged from the air nozzle to the irradiation site SA of the laser light LB.

In the laser processing method according to the embodiment, the first dust collection unit suctions the laser spatter LS via the first opening section provided at a position facing the surface of the steel sheet of the first housing. In the laser processing method according to the embodiment, the suctioned laser spatter LS is collected from the first dust collection duct provided at a portion different from the first opening section of the first housing. Consequently, the dust collection efficiency of the laser spatter LS can be further improved by controlling the air flow in the vicinity of the irradiation site of the laser light LB to have a more appropriate state.

In the laser processing method according to the embodiment, the second dust collection unit is more preferably provided at a further downstream side of the first dust collection unit.

### <<Second Embodiment>>

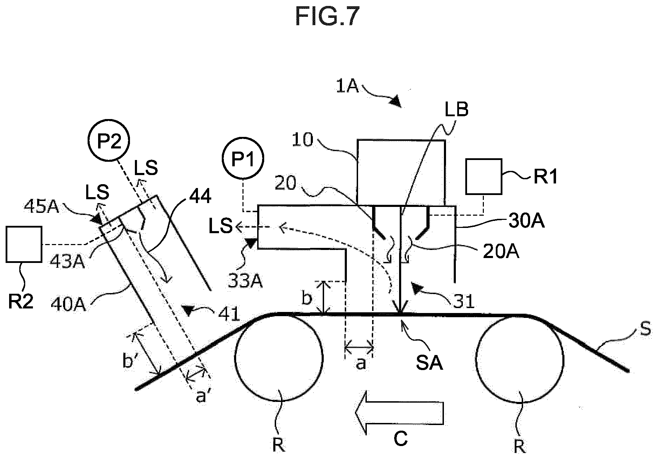

Next, with reference to Fig. 7, a laser processing device according to a second embodiment of the disclosure will be described focusing on differences from the laser processing device according to the first embodiment. Fig. 7 is a diagram schematically showing an example of a configuration of the laser processing device according to the second embodiment of the disclosure.

As shown in Fig. 7, a laser processing device 1A according to the embodiment includes a laser light source unit 10, an air nozzle 20, a first dust collection unit 30A, and a second dust collection unit 40A. Operating states of the laser light source unit 10, the air nozzle 20, the first dust collection unit 30A, and the second dust collection unit 40A are controlled by, for example, various computers (not shown) such as a process computer that integrally controls manufacturing steps of a steel sheet.

Here, the laser light source unit 10 and the air nozzle 20 according to the embodiment have configurations similar to those of the laser light source unit 10 and the air nozzle 20 according to the first embodiment and achieve similar effects, and thus detailed description thereof will be omitted hereinafter.

The first dust collection unit 30A according to the embodiment is a mechanism that collects the laser spatter LS floating in the vicinity of the irradiation site SA of the laser light LB due to the discharge of dry air from the air nozzle 20. The first dust collection unit 30A has, for example, a first opening section 31 for suctioning the laser spatter LS into a first housing (for example, a dust collection hood), and a first dust collection duct 33A for collecting the suctioned laser spatter LS, the first dust collection duct 33A being linked to the first opening section 31.

Here, unlike the first dust collection unit 30 according to the first embodiment, in the first dust collection unit 30A according to the embodiment, an average suction flow velocity of the first dust collection duct 33A (that is, a value obtained by dividing a suctioning flow rate of the first dust collection duct 33A by a cross-sectional area of the first dust collection duct 33A) is from 10 m/sec to 50 m/sec. Since the lower limit value of the average suction flow velocity of the first dust collection duct 33A is slightly lower than the lower limit value of the average suction flow velocity of the first dust collection duct 33 according to the first embodiment, in the embodiment, it is difficult for the laser spatter LS generated at the irradiation site of the laser light LB to be sufficiently collected only by the first dust collection unit 30A.

However, as shown in Fig. 7, the second dust collection unit 40A is further provided at the downstream side of the first opening section 31 of the first dust collection unit 30A in the conveyance direction C. As schematically shown in Fig. 7, the second dust collection unit 40A has a second opening section 41 provided at a position facing a surface of a steel sheet S of a second housing, and a slit nozzle 43A through which second gas 44 is discharged to the surface of the steel sheet S and which is provided at a position different from that of the second opening section 41 of the second housing. The second dust collection unit 40A has a second dust collection duct 45A which collects the laser spatter LS and is linked to the second opening section 41 of the second housing.

In the second dust collection unit 40A according to the embodiment, a flow velocity (that is, a discharge flow velocity) of dry air discharged from the slit nozzle 43A is set to 140 m/sec or less. While air is discharged at the discharge flow velocity of 140 m/sec or less, thereby preventing an air flow for collecting dust from be being disturbed, the laser spatter LS, which has not been collected by the first dust collection unit 30A, rides on the air flow to be lifted up from the steel sheet. The flow velocity (that is, the discharge flow velocity) of the dry air discharged from the slit nozzle 43A is preferably 100 m/sec or less.

In the second dust collection unit 40A according to the embodiment, the average suction flow velocity (that is, one obtained by dividing a suctioning flow rate of the second dust collection duct 45A by a cross-sectional area of the second dust collection duct 45A) in a cross section of the second dust collection duct 45A is, for example, from 15 m/sec to 30 m/sec. Since the average suction flow velocity is from 15 m/sec to 30 m/sec, the laser spatter LS that has not been collected by the first dust collection unit 30A can be sufficiently collected. The average suction flow velocity in the cross-sectional portion of the second dust collection duct 45A is preferably from 17 m/sec to 22 m/sec. The average suction flow velocity is from 17 m/sec to 22 m/sec, and thereby it is possible to further collect the laser spatter LS without disturbing the air flow around the second opening section 41.

The laser processing device 1A according to the embodiment is similar to the laser processing device 1 according to the first embodiment in configuration other than the configurations described above with reference to Fig. 7, and thus the detailed description thereof will be omitted. The configuration of the laser processing device 1 described in the first embodiment can also be applied to the laser processing device 1A according to the second embodiment as long as the effects of the laser processing device 1A according to the embodiment is not impaired.

The laser processing device according to the embodiment has been described above with reference to Fig. 7.

### [Examples]

Hereinafter, the laser processing device and the laser processing method according to the disclosure will be specifically described with reference to examples and comparative examples. The following examples are merely examples of the laser processing device and the laser processing method according to the disclosure, and the laser processing device and the laser processing method according to the disclosure are not limited to the following examples.

The present test example focuses on the configurations of the laser processing device shown in Figs. 1A, 4A, and 7, and the dust collection ratio of laser spatter was calculated by computer simulation, and evaluation thereof was performed.

The computer simulation was conducted using Fluent, which is commercially available numerical calculation software. At that time, the suctioning flow rate, an air nozzle flow rate, a slit nozzle flow rate, and a spatter generation amount were given as boundary conditions.

Here, the dust collection ratio in the first dust collection unit was calculated as (the number of particles of laser spatter reaching the dust collection duct provided in the first dust collection unit)/(the number of particles of laser spatter generated at the irradiation site of the laser light on the steel sheet). The dust collection ratio in the second dust collection unit was calculated as (the number of particles of laser spatter reaching the second dust collection duct provided in the second dust collection unit)/(the number of particles of laser spatter generated at a reaching position of the air from the slit nozzle on the steel sheet). The dust collection ratio is a value corresponding to the dust collection efficiency in each dust collection unit.

A dust collection ratio of the laser processing device as a whole was additionally calculated as follows. The number of particles of laser spatter collected by the first dust collection unit and the number of particles of laser spatter that could not be collected by the first dust collection unit were calculated using the number of particles of laser spatter generated at the irradiation site of the laser light and the dust collection ratio of the first dust collection unit obtained from the simulation. Then, the number of particles of laser spatter collected by the second dust collection unit was calculated by multiplying the calculated number of particles of laser spatter that could not be collected by the first dust collection unit by the dust collection ratio of the second dust collection unit obtained from the simulation.

Subsequently, the total of the number of particles of the laser spatter collected by the first dust collection unit and the number of particles of the laser spatter collected by the second dust collection unit was divided by the number of particles of the laser spatter generated at the irradiation site of the laser light, and thereby the dust collection ratio of the laser processing device as a whole was calculated.

The calculated dust collection ratio was evaluated in accordance with the following evaluation criteria.

| | |
|---|---|
| Score | "A": Dust collection ratio of 0.95 or higher |
| | "B": Dust collection ratio of from 0.80 to lower than 0.95 |
| | "C": Dust collection ratio of from 0.60 to lower than 0.80 |
| | "D": Dust collection ratio of lower than 0.60 |

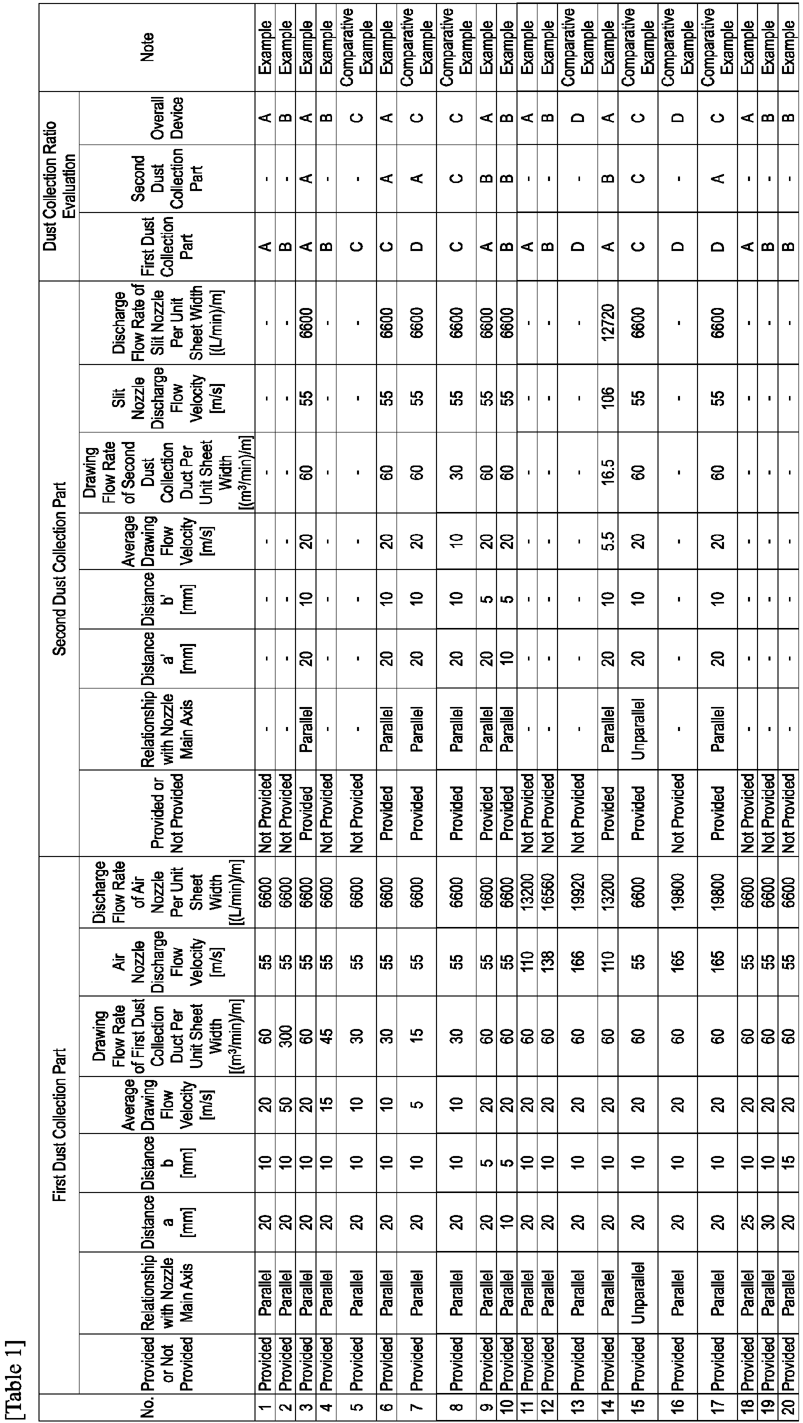

As is clear from Table 1, it can be found that an excellent dust collection ratio is obtained in an example corresponding to the example of the disclosure, while the dust collection ratio is lower than 0.80 in an example corresponding to the comparative example of the disclosure.

With respect to a suctioning flow rate per unit sheet width length of the second dust collection unit in Table 1, a flying-out speed of the laser spatter remaining on the steel sheet S from the steel sheet S is smaller to the extent that the flying-out speed can be regarded as substantially zero, compared to a flying-out speed of the laser spatter from the site being irradiated with the steel sheet S. Therefore, even if a value of the suctioning flow rate per unit sheet width length of the second dust collection unit is smaller overall than the value of the suctioning flow rate per unit sheet width length of the corresponding first dust collection unit, the laser spatter can be efficiently collected.

The preferred embodiments of the disclosure have been described in detail above with reference to the accompanying drawings, but the disclosure is not limited to the examples. For example, the disclosure can be configured by partially combining the configurations shown in Figs. 1 to 7. It is obvious for a person of ordinary skill in the technical field to which the disclosure pertains to conceive various examples of changes or modifications within the scope of the technical ideas described in the claims, and it is naturally understood that these examples also pertain to the technical scope of the disclosure.

### «Supplementary Note»

From the specification, the following aspects are conceptualized.

Aspect 1 provides a laser processing device including: a laser light source unit for irradiating a surface of a steel sheet being conveyed in a prescribed direction with laser light; an air nozzle for discharging first gas toward an irradiation site of the laser light at a flow velocity of 140 m/sec or less; and a first dust collection unit having a first opening section in which a central axis passing through a center of an opening section shape is disposed substantially parallel to a nozzle main axis direction of the air nozzle and which is formed at a position facing the surface of the steel sheet, and a first dust collection duct linked to the first opening section, the first dust collection unit suctioning laser spatter generated from the irradiation site of the laser light via the first opening section and collecting the suctioned laser spatter using the first dust collection duct in a state in which an average suction flow velocity, which is a value obtained by dividing a suctioning flow rate of the first dust collection duct by a cross-sectional area of the first dust collection duct, is from 15 m/sec to 50 /sec.

Aspect 2 provides the laser processing device according to Aspect 1, further including a second dust collection unit provided at the downstream side of the first opening section of the first dust collection unit in a conveyance direction of the steel sheet, in which the second dust collection unit has a second opening section provided at a position facing the surface of the steel sheet, a slit nozzle which is provided at a position different from a position of the second opening section and through which second gas is discharged to the surface of the steel sheet, and a second dust collection duct which is connected to the second opening section and through which laser spatter is collected, and the slit nozzle and the second dust collection duct are provided in a positional relationship in which a nozzle main axis direction of the slit nozzle and a suctioning direction of the laser spatter in the second dust collection duct are substantially parallel to each other.

Aspect 3 provides a laser processing device including: a laser light source unit for irradiating a surface of a steel sheet being conveyed in a prescribed direction with laser light; an air nozzle for discharging first gas toward an irradiation site of the laser light at a flow velocity of 140 m/sec or less; a first dust collection unit having a first opening section in which a central axis passing through a center of an opening shape is disposed substantially parallel to a nozzle main axis direction of the air nozzle and which is formed at a position facing the surface of the steel sheet, and a first dust collection duct linked to the first opening section, the first dust collection unit suctioning laser spatter generated from the irradiation site of the laser light via the first opening section and collecting the suctioned laser spatter using the first dust collection duct in a state in which the average suction flow velocity, which is a value obtained by dividing a suctioning flow rate of the first dust collection duct by a cross-sectional area of the first dust collection duct, is from 10 m/sec to 50 m/sec; and a second dust collection unit that is provided at the downstream side of the first opening section of the first dust collection unit in a conveyance direction of the steel sheet, and that has a second opening section provided at a position facing the surface of the steel sheet, a slit nozzle which is provided at a position different from a position of the second opening section and through which second gas is discharged to the surface of the steel sheet, and a second dust collection duct connected to the second opening section in a positional relationship in which a suctioning direction of the laser spatter is substantially parallel to a nozzle main axis direction of the slit nozzle, the second dust collection unit discharging the second gas at a flow velocity of 140 m/sec or less through the slit nozzle, suctioning the laser spatter, which is not collected by the first dust collection unit, via the second opening section, and collecting the suctioned laser spatter using the second dust collection duct in a state in which an average suction flow velocity, which is a value obtained by dividing a suctioning flow rate of the second dust collection duct by a cross-sectional area of the second dust collection duct, is from 15 m/sec to 30 m/sec.

Aspect 4 provides the laser processing device according to any one of Aspects 1 to 3, in which, when the laser processing device is viewed from a side surface side of the steel sheet, a separation distance in the conveyance direction of the steel sheet between a position corresponding to an end surface of the air nozzle and an opening end portion of the first opening section of the first dust collection unit is 25 mm or less, and when the laser processing device is viewed from the side surface side of the steel sheet, a minimum value of a height from an irradiation site of the laser light on the steel sheet to a lower end of the first opening section of the first dust collection unit is 10 mm or less.

Aspect 5 provides a laser processing method including: irradiating a surface of a steel sheet being conveyed in a prescribed direction with laser light, by a laser light source unit; discharging first gas toward an irradiation site of the laser light at a flow velocity of 140 m/sec or less, by an air nozzle; suctioning laser spatter generated from the irradiation site of the laser light via a first opening section of a first dust collection unit having the first opening section in which a central axis passing through a center of an opening shape is disposed substantially parallel to a nozzle main axis direction of the air nozzle and which is formed at a position facing the surface of the steel sheet, and a first dust collection duct connected to the first opening section; and collecting the suctioned laser spatter using the first dust collection duct in a state in which an average suction flow velocity, which is a value obtained by dividing a suctioning flow rate of the first dust collection duct by a cross-sectional area of the first dust collection duct, is from 15 m/sec to 50 m/sec.

Aspect 6 provides a laser processing method including: irradiating a surface of a steel sheet being conveyed in a prescribed direction with laser light, by a laser light source unit; discharging first gas toward an irradiation site of the laser light at a flow velocity of 140 m/sec or less, by an air nozzle; suctioning laser spatter generated from the irradiation site of the laser light via a first opening section of a first dust collection unit having the first opening section in which a central axis passing through a center of an opening shape is disposed substantially parallel to a nozzle main axis direction of the air nozzle and which is formed at a position facing the surface of the steel sheet, and a first dust collection duct connected to the first opening section; collecting the suctioned laser spatter using the first dust collection duct in a state in which an average suction flow velocity, which is a value obtained by dividing a suctioning flow rate of the first dust collection duct by a cross-sectional area of the first dust collection duct, is from 10 m/sec to 50 m/sec; discharging second gas at a flow velocity of 140 m/sec or less using a slit nozzle of a second dust collection unit that is provided at the downstream side of the first opening section of the first dust collection unit in a conveyance direction of the steel sheet, and that has a second opening section provided at a position facing the surface of the steel sheet, the slit nozzle through which the second gas is discharged to the surface of the steel sheet and which is provided at a position different from a position of the second opening section, and a second dust collection duct which is connected to the second opening section in a positional relationship in which a suctioning direction of the laser spatter is substantially parallel to a nozzle main axis direction of the slit nozzle; suctioning, via the second opening section, the laser spatter which is not collected by the first dust collection unit; and collecting the suctioned laser spatter using the second dust collection duct in a state in which an average suction flow velocity, which is a value obtained by dividing a suctioning flow rate of the second dust collection duct by a cross-sectional area of the second dust collection duct, is from 15 m/sec to 30 m/sec.

### <<Other Aspects>>

The following additional aspects are conceptualized from the specification.

Additional Aspect 1 provides a laser spatter collection device that collects laser spatter which is dust generated from a site being irradiated with laser light due to the laser light emitted to a surface of a steel sheet, the laser spatter collection device including: a laser light source unit for irradiating the surface of the steel sheet being conveyed in a prescribed direction with the laser light; an air nozzle for discharging gas toward the irradiation site of the laser light; and a first dust collection unit that suctions the laser spatter generated from the irradiation site of the laser light and collects, into a first dust collection duct connected to a first opening section of a housing, the suctioned laser spatter, via the first opening section of the housing provided at a position facing the surface of the steel sheet, in which a central axis passing through a center of an opening shape of the first opening section is provided to be substantially parallel to a nozzle main axis direction of the air nozzle, an average suction flow velocity, which is a value obtained by dividing a suctioning flow rate of the first dust collection duct by a cross-sectional area of the first dust collection duct, is from 15 m/sec to 30 m/sec, and a flow velocity of the gas discharged from the air nozzle is 140 m/sec or less.

Additional Aspect 2 provides the laser spatter collection device according to Additional Aspect 1, further including a second dust collection unit provided at the downstream side of the first opening section of the first dust collection unit in the conveyance direction, in which the second dust collection unit has a second opening section of a housing provided at a position facing the surface of the steel sheet, a slit nozzle which is provided at a position different from a position of the second opening section of the housing and through which gas is discharged to the surface of the steel sheet, and a second dust collection duct which is connected to the second opening section and through which laser spatter is collected, and the slit nozzle and the second dust collection duct are provided in such a positional relationship that a nozzle main axis direction of the slit nozzle and a suctioning direction of the laser spatter in the second dust collection duct are substantially parallel to each other.

Additional Aspect 3 provides a laser spatter collection device that collects laser spatter which is dust generated from a site being irradiated with laser light due to the laser light emitted to a surface of a steel sheet, the laser spatter collection device including: a laser light source unit for irradiating the surface of the steel sheet being conveyed in a prescribed direction with the laser light; an air nozzle for discharging gas toward the irradiation site of the laser light; a first dust collection unit that suctions the laser spatter generated from the irradiation site of the laser light and collects, into a first dust collection duct connected to a first opening section of a housing, the suctioned laser spatter, via the first opening section of the housing provided at a position facing the surface of the steel sheet; and a second dust collection unit having a second opening section of a housing which is provided at the downstream side of the first opening section of the first dust collection unit in the conveyance direction and is provided at a position facing the surface of the steel sheet, a slit nozzle which is provided at a position different from a position of the second opening section of the housing and through which gas is discharged to the surface of the steel sheet, and a second dust collection duct which is connected to the second opening section of the housing and through which the laser spatter is collected, in which a central axis passing through a center of an opening shape of the first opening section is provided to be substantially parallel to a nozzle main axis direction of the air nozzle, the slit nozzle and the second dust collection duct are provided in such a positional relationship that a nozzle main axis direction of the slit nozzle and a suctioning direction of the laser spatter in the second dust collection duct are substantially parallel to each other, an average suction flow velocity, which is a value obtained by dividing a suctioning flow rate of the first dust collection duct by a cross-sectional area of the first dust collection duct, is from 10 m/sec to 30 m/sec, a flow velocity of the gas discharged from the air nozzle is 140 m/sec or less, an average suction flow velocity, which is a value obtained by dividing a suctioning flow rate of the second dust collection duct by a cross-sectional area of the second dust collection duct, is from 15 m/sec to 30 m/sec, and a flow velocity of the gas discharged from the slit nozzle is 140 m/sec or less.

Additional Aspect 4 provides the laser spatter collection device according to any one of Additional Aspects 1 to 3 in which, in a plan view of the laser spatter collection device from a side surface side of the steel sheet, a separation distance in the conveyance direction between a position corresponding to an end surface of the air nozzle and an opening end portion of the first opening section of the first dust collection unit is 25 mm or less, and in a plan view of the laser spatter collection device from the side surface side of the steel sheet, a minimum value of a height from an irradiation site of the laser light on the steel sheet to a lower end of the first opening section of the first dust collection unit is 10 mm or less.

Additional Aspect 5 provides a laser spatter collecting method of collecting laser spatter which is dust generated from a site being irradiated with laser light due to the laser light emitted to a surface of a steel sheet, the laser spatter collecting method including: irradiating the surface of the steel sheet being conveyed in a prescribed direction with laser light from a laser light source unit, and discharging gas from an air nozzle to the irradiation site of the laser light; and collecting the laser spatter by a first dust collection unit that suctions the laser spatter generated from the irradiation site of the laser light and collects, into a first dust collection duct connected to a first opening section of a housing, the suctioned laser spatter, via the first opening section of the housing provided at a position facing the surface of the steel sheet, in which a central axis passing through a center of an opening shape of the opening section is provided to be substantially parallel to a nozzle main axis direction of the air nozzle, an average suction flow velocity, which is a value obtained by dividing a suctioning flow rate of the first dust collection duct by a cross-sectional area of the first dust collection duct, is from 15 m/sec to 30 m/sec, and a flow velocity of the gas discharged from the air nozzle is 140 m/sec or less.

Additional Aspect 6 provides a laser spatter collecting method of collecting laser spatter which is dust generated from a site being irradiated with laser light due to the laser light emitted to a surface of a steel sheet, the laser spatter collecting method including: irradiating the surface of the steel sheet being conveyed in a prescribed direction with laser light from a laser light source unit, and discharging gas from an air nozzle to the irradiation site of the laser light; collecting the laser spatter by a first dust collection unit that suctions the laser spatter generated from the irradiation site of the laser light and collects, into a first dust collection duct connected to a first opening section of a housing, the suctioned laser spatter, via the first opening section of the housing provided at a position facing the surface of the steel sheet; collecting, by a second dust collection unit, the laser spatter which has not been collected by the first dust collection unit, the second dust collection unit having a second opening section of a housing which is provided at the downstream side of the first opening section of the first dust collection unit in the conveyance direction and is provided at a position facing the surface of the steel sheet, a slit nozzle which is provided at a position different from a position of the second opening section of the housing and through which gas is discharged to the surface of the steel sheet, and a second dust collection duct which is connected to the second opening section of the housing and through which the laser spatter is collected, in which a central axis passing through a center of an opening shape of the first opening section is provided to be substantially parallel to a nozzle main axis direction of the air nozzle, the slit nozzle and the second dust collection duct are provided in such a positional relationship that a nozzle main axis direction of the slit nozzle and a suctioning direction of the laser spatter in the second dust collection duct are substantially parallel to each other, an average suction flow velocity, which is a value obtained by dividing a suctioning flow rate of the first dust collection duct by a cross-sectional area of the first dust collection duct, is from 10 m/sec to 30 m/sec, a flow velocity of the gas discharged from the air nozzle is 140 m/sec or less, an average suction flow velocity, which is a value obtained by dividing a suctioning flow rate of the second dust collection duct by a cross-sectional area of the second dust collection duct, is from 15 m/sec to 30 m/sec, and a flow velocity of the gas discharged from the slit nozzle is 140 m/sec or less.

According to the additional aspects, the laser spatter generated due to the irradiation of the laser light can be more efficiently collected.

The disclosure of Japanese Patent Application No. 2022-015591 filed on February 3, 2022 is incorporated herein by reference in its entirety.

All of the literatures, patent applications, and technical standards described in this specification are incorporated herein by reference to the same extent that individual literatures, patent applications, and technical standards were specifically and individually indicated to be incorporated by reference.
1, 1A Laser processing device
10 Laser light source unit
20 Air nozzle
20A First gas
30, 30A First dust collection unit
31 First opening section
33, 33A First dust collection duct
35 Carbon plate
40, 40A Second dust collection unit
41 Second opening section
43, 43A Slit nozzle
44A Second gas
45, 45A Second dust collection duct
C Conveyance direction
LB Laser light
LS Laser spatter
P1 First suctioning pump
P2 Second suctioning pump
R1 First blower
R2 Second blower
S Steel sheet
SA Site being irradiated

## Claims

1. A laser processing device comprising:
a laser light source unit for irradiating a surface of a steel sheet being conveyed in a prescribed direction with laser light;
an air nozzle for discharging first gas toward an irradiation site of the laser light at a flow velocity of 140 m/sec or less; and
a first dust collection unit having a first opening section in which a central axis passing through a center of an opening shape is disposed substantially parallel to a nozzle main axis direction of the air nozzle and which is formed at a position facing the surface of the steel sheet, and a first dust collection duct linked to the first opening section, the first dust collection unit suctioning laser spatter generated from the irradiation site of the laser light via the first opening section and collecting the suctioned laser spatter using the first dust collection duct in a state in which an average suction flow velocity, which is a value obtained by dividing a suctioning flow rate of the first dust collection duct by a cross-sectional area of the first dust collection duct, is from 15 m/sec to 50 m/sec.

2. The laser processing device according to claim 1, further comprising a second dust collection unit provided at a downstream side of the first opening section of the first dust collection unit in a conveyance direction of the steel sheet, wherein:
the second dust collection unit has a second opening section provided at a position facing the surface of the steel sheet, a slit nozzle which is provided at a position different from a position of the second opening section and through which second gas is discharged to the surface of the steel sheet, and a second dust collection duct which is connected to the second opening section and through which laser spatter is collected, and
the slit nozzle and the second dust collection duct are provided in a positional relationship in which a nozzle main axis direction of the slit nozzle and a suctioning direction of the laser spatter in the second dust collection duct are substantially parallel to each other.

3. A laser processing device comprising:
a laser light source unit for irradiating a surface of a steel sheet being conveyed in a prescribed direction with laser light;
an air nozzle for discharging first gas toward an irradiation site of the laser light at a flow velocity of 140 m/sec or less;
a first dust collection unit having a first opening section in which a central axis passing through a center of an opening shape is disposed substantially parallel to a nozzle main axis direction of the air nozzle and which is formed at a position facing the surface of the steel sheet, and a first dust collection duct linked to the first opening section, the first dust collection unit suctioning laser spatter generated from the irradiation site of the laser light via the first opening section and collecting the suctioned laser spatter using the first dust collection duct in a state in which the average suction flow velocity, which is a value obtained by dividing a suctioning flow rate of the first dust collection duct by a cross-sectional area of the first dust collection duct, is from 10 m/sec to 50 m/sec; and
a second dust collection unit that is provided at a downstream side of the first opening section of the first dust collection unit in a conveyance direction of the steel sheet, and that has a second opening section provided at a position facing the surface of the steel sheet, a slit nozzle which is provided at a position different from a position of the second opening section and through which second gas is discharged to the surface of the steel sheet, and a second dust collection duct connected to the second opening section in a positional relationship in which a suctioning direction of the laser spatter is substantially parallel to a nozzle main axis direction of the slit nozzle, the second dust collection unit discharging the second gas at a flow velocity of 140 m/sec or less through the slit nozzle, suctioning the laser spatter, which is not collected by the first dust collection unit, via the second opening section, and collecting the suctioned laser spatter using the second dust collection duct in a state in which an average suction flow velocity, which is a value obtained by dividing a suctioning flow rate of the second dust collection duct by a cross-sectional area of the second dust collection duct, is from 15 m/sec to 30 m/sec.

4. The laser processing device according to any one of claims 1 to 3, wherein:
when the laser processing device is viewed from a side surface side of the steel sheet, a separation distance in the conveyance direction of the steel sheet between a position corresponding to an end surface of the air nozzle and an opening end portion of the first opening section of the first dust collection unit is 25 mm or less, and
when the laser processing device is viewed from the side surface side of the steel sheet, a minimum value of a height from an irradiation site of the laser light on the steel sheet to a lower end of the first opening section of the first dust collection unit is 10 mm or less.

5. A laser processing method comprising:
irradiating a surface of a steel sheet being conveyed in a prescribed direction with laser light, by a laser light source unit;
discharging first gas toward an irradiation site of the laser light at a flow velocity of 140 m/sec or less, by an air nozzle;
suctioning laser spatter generated from the irradiation site of the laser light via a first opening section of a first dust collection unit having the first opening section in which a central axis passing through a center of an opening shape is disposed substantially parallel to a nozzle main axis direction of the air nozzle and which is formed at a position facing the surface of the steel sheet, and a first dust collection duct connected to the first opening section; and
collecting the suctioned laser spatter using the first dust collection duct in a state in which an average suction flow velocity, which is a value obtained by dividing a suctioning flow rate of the first dust collection duct by a cross-sectional area of the first dust collection duct, is from 15 m/sec to 50 m/sec.

6. A laser processing method comprising:
irradiating a surface of a steel sheet being conveyed in a prescribed direction with laser light, by a laser light source unit;
discharging first gas toward an irradiation site of the laser light at a flow velocity of 140 m/sec or less, by an air nozzle;
suctioning laser spatter generated from the irradiation site of the laser light via a first opening section of a first dust collection unit having the first opening section in which a central axis passing through a center of an opening shape is disposed substantially parallel to a nozzle main axis direction of the air nozzle and which is formed at a position facing the surface of the steel sheet, and a first dust collection duct connected to the first opening section;
collecting the suctioned laser spatter using the first dust collection duct in a state in which an average suction flow velocity, which is a value obtained by dividing a suctioning flow rate of the first dust collection duct by a cross-sectional area of the first dust collection duct, is from 10 m/sec to 50 m/sec;
discharging second gas at a flow velocity of 140 m/sec or less using a slit nozzle of a second dust collection unit that is provided at a downstream side of the first opening section of the first dust collection unit in a conveyance direction of the steel sheet, and that has a second opening section provided at a position facing the surface of the steel sheet, the slit nozzle through which the second gas is discharged to the surface of the steel sheet and which is provided at a position different from a position of the second opening section, and a second dust collection duct which is connected to the second opening section in a positional relationship in which a suctioning direction of the laser spatter is substantially parallel to a nozzle main axis direction of the slit nozzle;
suctioning, via the second opening section, the laser spatter which is not collected by the first dust collection unit; and
collecting the suctioned laser spatter using the second dust collection duct in a state in which an average suction flow velocity, which is a value obtained by dividing a suctioning flow rate of the second dust collection duct by a cross-sectional area of the second dust collection duct, is from 15 m/sec to 30 m/sec.
